# EUROPEAN PATENT APPLICATION

(11) **EP 4 807 680 A1**
(43) Date of publication of application: **16.09.2026**
(21) Application number: 26163734.2
(22) Date of filing: 10.03.2026
(51) Int. Cl.: G06T 13/40

(54) **SYSTEMS AND METHODS FOR MOTION GENERATION USING GENERATIVE MODELS**

(30) Priority: 13.03.2025 US 202563771405 P
(71) Applicant: Meshcapade GmbH, 72072 Tübingen (DE); Max-Planck-Gesellschaft zur Förderung der Wissenschaften e.V., 80539 München (DE)
(72) Inventor: ZHANG, Yan, 81371 München (DE); FENG, Yao, Palo Alto, 94304 (US); CSEKE, Alpár, 1114 Budapest (HU); SAINI, Nitin, 110078 New Delhi (IN); BAJANDAS, Nathan, 80807 München (DE); HERON, Nicolas, East Hampton, 11937 (US); BLACK, Michael, 72076 Tübingen (DE)
(74) Representative: Cameron Intellectual Property Ltd

(57) **Abstract**

Systems (100) and methods are provided for motion generation. In some examples, a method includes extracting a plurality of motion segments (102), each motion segment including a series of frames, training a diffusion model based on each motion segment of the plurality of motion segments to generate a base motor model (104), incorporating a control adaptor (106) into one or more transformer blocks of the base motor model (104), and training the control adaptor (106) by using the control input to obtain a taskspecific adapted model.

## Description

### RELATED APPLICATION

This application is related to and claims priority from US Provisional Application 63/771,405, filed 03/13/2025, titled "PRIMAL: Physically Reactive and Interactive Motor Model for Avatar Learning," the disclosure of which is incorporated herein by reference in its entirety.

### TECHNICAL FIELD

Certain embodiments of the present disclosure generally relate to motor systems and methods of an interactive avatar. More specifically, some embodiments of the disclosure relate to physically reactive and interactive motor systems and methods for avatar learning.

### BACKGROUND

Recent advancements in three-dimensional (3D) human motion generation have enabled systems to produce realistic motion sequences conditioned on inputs such as text descriptions or preexisting motion data. While these techniques can generate visually convincing animations, they generally do not capture the interactive and continuously adaptive nature of real human movement. Most existing models operate in an offline and therefore lack the ability to respond in real time to user commands, environmental changes, or externally applied forces.

### SUMMARY

Certain embodiments of the present disclosure generally relate to motion generation. More specifically, some embodiments of the disclosure relate to systems and methods for motion generation using diffusion models.

As recited in examples, Example 1 is a method for motion generation. The method includes extracting a plurality of motion segments, each motion segment including a series of frames; training a diffusion model based on each motion segment of the plurality of motion segments to generate a base motor model; incorporating a control adaptor into one or more transformer blocks of the base motor model, the control adaptor configured to receive a control input; and training the control adaptor by using the control input to obtain a task-specific adapted model.

As recited in examples, Example 2 is a system that includes at least one processor, and memory storing instructions that, when executed by the at least one processor, cause the system to perform a set of operations. In some examples, the set of operations includes extracting a plurality of motion segments, each motion segment including a series of frames; training a diffusion model based on each motion segment of the plurality of motion segments to generate a base motor model; incorporating a control adaptor into one or more transformer blocks of the base motor model, the control adaptor configured to receive a control input; and training the control adaptor by using the control input to obtain a task-specific adapted model.

As recited in examples, Example 3 is a non-transitory computer-readable medium storing instructions for motion generation. In some examples, the instructions when executed by one or more processors, cause the one or more processors to perform a set of operations including extracting a plurality of motion segments, each motion segment including a series of frames; training a diffusion model based on each motion segment of the plurality of motion segments to generate a base motor model; incorporating a control adaptor into one or more transformer blocks of the base motor model, the control adaptor configured to receive a control input; and training the control adaptor by using the control input to obtain a task-specific adapted model.

While multiple embodiments are disclosed, still other embodiments of the present disclosure will become apparent to those skilled in the art from the following detailed description, which shows and describes illustrative embodiments of the disclosure. Accordingly, the drawings and detailed description are to be regarded as illustrative in nature and not restrictive.

### BRIEF DESCRIPTION OF THE DRAWINGS

FIG. 1 is a simplified block diagram illustrating an example system for motion generation, in accordance with embodiments of the subject matter of the disclosure.
FIG. 2 is a simplified block diagram illustrating an example network architecture for motion generation, in accordance with embodiments of the subject matter of the disclosure.
FIG. 3 is a simplified block diagram illustrating an example network architecture for motion generation with task-specific adaptation, in accordance with embodiments of the subject matter of the disclosure.
FIG. 4 illustrates a variety of example outputs produced by a generative, real-time three-dimensional character animation system, in accordance with embodiments of the subject matter of the disclosure.
FIG. 5 illustrates examples of future motions generated based on an initial state, in accordance with embodiments of the subject matter of the disclosure.
FIG. 6 illustrates examples of avatar reactions to externally induced impulses, in accordance with embodiments of the subject matter of the disclosure.
FIG. 7 illustrates examples of snapshots from a personalized motion-capture dataset, in accordance with embodiments of the subject matter of the disclosure.
FIG. 8 is a flow diagram illustrating an example method for motion generation, in accordance with embodiments of the subject matter of the disclosure.
FIG. 9 is a simplified block diagram of a computing device and/or a computing system, with which aspects of the present disclosure may be practiced.

While the disclosure is amenable to various modifications and alternative forms, specific embodiments have been shown by way of example in the drawings and are described in detail below. The intention, however, is not to limit the disclosure to the particular embodiments described. On the contrary, the disclosure is intended to cover all modifications, equivalents, and alternatives falling within the scope of the disclosure as defined by the appended claims.

### DETAILED DESCRIPTION

As the terms are used herein with respect to measurements (e.g., dimensions, characteristics, attributes, components, etc.), and ranges thereof, of tangible things (e.g., products, inventory, etc.) and/or intangible things (e.g., data, electronic representations of currency, accounts, information, portions of things (e.g., percentages, fractions), calculations, data models, dynamic system models, algorithms, parameters, etc.), "about" and "approximately" may be used, interchangeably, to refer to a measurement that includes the stated measurement and that also includes any measurements that are reasonably close to the stated measurement, but that may differ by a reasonably small amount such as will be understood, and readily ascertained, by individuals having ordinary skill in the relevant arts to be attributable to measurement error; differences in measurement and/or manufacturing equipment calibration; human error in reading and/or setting measurements; adjustments made to optimize performance and/or structural parameters in view of other measurements (e.g., measurements associated with other things); particular implementation scenarios; imprecise adjustment and/or manipulation of things, settings, and/or measurements by a person, a computing device, and/or a machine; system tolerances; control loops; machine-learning; foreseeable variations (e.g., statistically insignificant variations, chaotic variations, system and/or model instabilities, etc.); preferences; and/or the like.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items, and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information.

According to certain embodiments, systems and methods for motion generation are provided. Disclosed herein is a motion-generation framework that models a motor system of an interactive avatar as a generative motion model capable of producing perpetual, realistic, controllable, and responsive movement in three-dimensional space. Conventional human-motion generation techniques often lack the real-time responsiveness and physical naturalness characteristic of human behavior. To address these limitations, the disclosed systems and methods utilize a two-stage learning paradigm, according to some embodiments. In a first, unsupervised pretraining stage, the system is trained on large quantities of short-duration motion segments to learn short-term body dynamics and establish a foundational motor model. Given a single-frame initial state at inference time, this pretrained model can autonomously generate unbounded and physically plausible motion and can respond in real time to externally induced perturbations. In a second adaptation stage, a control adaptor (e.g., a Control Net-style adaptor) is incorporated to enable efficient task-specific fine-tuning of the base model for applications such as few-shot personalized action generation and spatial target reaching. The resulting framework supports deployment in real-time character-animation environments and enables avatars that exhibit highly responsive and natural-appearing behaviors. In some embodiments, a control adapter can be implemented through a lightweight control adaptor module that interfaces with one or more layers of the base model to enable efficient task-specific fine-tuning. This adaptor allows the pretrained motor model to be conditioned on external control signals-such as action identifiers or spatial targets-thereby supporting applications including few-shot personalized action generation and target-directed motion synthesis, without modifying the parameters of the underlying base model. In some embodiments, a control adaptor can be implemented based on a neural-network architecture developed for image diffusion models, which works by attaching an auxiliary network to a frozen base model, allowing external control inputs (e.g., edges, poses, depth maps) to influence the generative process without altering the pretrained weights.

Conventional systems and methods for three-dimensional (3D) human motion generation exhibit a number of limitations. In certain examples, while these conventional techniques can generate visually convincing animations, they generally do not capture the interactive and continuously adaptive nature of real human movement. In some examples, existing models operate in an offline or open-loop manner and therefore lack the ability to respond in real time to user commands, environmental changes, or externally applied forces.

In some examples, for autonomous digital characters to appear lifelike, it is desired to maintain ongoing motion while remaining responsive to external stimuli. Such characters require a low-level motor control capability that operates continuously and can adapt instantaneously to commands or perturbations without sacrificing realism. Existing generative motion models do not adequately provide this type of real-time interactive behavior.

According to certain embodiments, to address the above limitations, a two-stage approach is introduced. In the first stage, a low-level motor system is trained using motion capture data to learn and reproduce the dynamic properties of human movement. This foundational motor model captures intrinsic motion patterns and generalizes beyond the specific sequences present in the training data. In the second stage, higher-level interactive behaviors are developed on top of this base motor system, allowing the character to follow commands and react to its environment while maintaining realistic motion dynamics. This architecture enables the creation of an autonomous agent that both moves independently and responds fluidly to real-time inputs.

In certain examples, approaches can provide systems and methods for offline motion generation. For example, large motion-capture (mocap) datasets have enabled advances in data-driven 3D motion generation. A variety of generative models have been developed to produce human motion conditioned on text prompts, example motion sequences, spatial constraints, object or scene interactions, dance styles, and other control signals. In some examples, diffusion-based architectures have proven effective due to their expressive generative capacity and controllability. For example, transformer-based diffusion models have been trained on paired text-motion datasets to generate high-fidelity motion from natural language descriptions. In some examples, other systems incorporate adaptor networks, such as Control Net-style modules, to enhance spatial or trajectory-based control. In some examples, additional approaches employ consistency models to enable real-time text-conditioned motion generation or formulate spatial control as an autoregressive problem. However, most of the above offline generative models produce motion of limited duration and are not designed for continuous, real-time interaction, making them unsuitable for controlling responsive avatars.

Some conventional approaches involve pretraining-then-finetuning frameworks for text-to-motion. Such systems train large-scale motion foundation models on unlabeled mocap data and subsequently adapt them to controllable motion tasks using lightweight adaptor networks and mixtures-of-experts. Although these systems share a multi-stage training strategy, they are typically offline, generate motion over fixed temporal windows, and do not emphasize real-time reactivity. In contrast, the approach described here employs an autoregressive formulation capable of generating unbounded motion from a single initial frame, enabling continuous real-time control and responsiveness to external perturbations, according to some embodiments.

In certain examples, approaches can provide systems and methods for physics-based motion generation. Conventional data-driven generative approaches often suffer from a lack of physical fidelity, which can lead to unrealistic artifacts such as foot sliding, incorrect contact handling, or implausible responses to impacts. In some examples, to address these issues, physics-based methods integrate physical simulation into the motion generation process. In some examples, some techniques employ reinforcement learning and adversarial imitation learning to produce physically plausible interactions between characters and their environments. In some examples, some techniques generate pedestrian or character locomotion with enhanced control of body parts, particularly in complex scenes such as driving environments.

In certain examples, hybrid approaches that combine simulation with generative models have been developed. The hybrid approaches include techniques that project generated motion into a physically constrained space during diffusion, methods that apply simulation for tracking motion planned by autoregressive diffusion models, and hierarchical systems that merge diffusion-based planning with simulation-based execution. In some examples, simulation methods offer the benefit of naturally adapting to external forces and perturbations; however, their generated motions often lack the naturalness and diversity achieved by diffusion models. Moreover, simulation-driven policies are typically specialized to limited motor skill sets rather than serving as a general human motion control system.

In certain examples, approaches can provide systems and methods for autoregressive unbounded motion generation. In some examples, autoregressive models generate future motion frames conditioned on prior frames and have been used to produce continuous or task-directed movement. In some examples, variational autoencoder (VAE)-based systems have been developed to recursively generate motion primitives and to enable skills such as spatial target reaching. In some examples, some models leverage VAE architectures to synthesize motions that reach specific spatial goals, or to generate continuous human-scene interactions through scene-aware policies. In some examples, diffusion models have been adapted to autoregressive formulations capable of producing unbounded motion streams. These include models that treat style, control signals, and motion history as separate conditioning tokens, models that incorporate short-term motion history along with text or scene information, and autoregressive diffusion models that operate in latent motion spaces. In some examples, some approaches also integrate reinforcement learning on top of pretrained diffusion models to enable control for specific tasks. In some examples, tokenization-based pipelines combine autoregressive VAEs with diffusion to perform high-fidelity, online text-to-motion generation, further supporting control via latent-space optimization or learned policies.

According to certain embodiments, the approach described herein can generate motion from a single initial frame containing joint positions and/or velocities. In contrast, conventional autoregressive diffusion systems typically generate a fixed number of future frames given a sequence of past frames. In some embodiments, systems and methods described herein provide a formulation that allows the system to learn human movement directly from unstructured mocap data without annotations or physics-based supervision. In some embodiments, despite the absence of explicit physical constraints, the generated motion exhibits visually plausible physical behavior. In some embodiments, the systems and methods described herein may not require motion tokenization or scheduled sampling, resulting in a streamlined and efficient training process.

According to certain embodiments, the present disclosure provides a motion generation approach, referred to herein as PRIMAL^{™} (Physically Reactive and Interactive Motor Model for Avatar Learning), developed by Meshcapade GmbH. In some embodiments, systems and methods for motion generation described herein (e.g., PRIMAL^{™} systems) can provide a data-driven framework for low-level motor control using an autoregressive diffusion model trained to represent human movement over short temporal intervals. In some embodiments, despite the absence of physics simulation during training, systems and methods for motion generation described herein (e.g., PRIMAL^{™} systems) can produce motions that exhibit physically realistic characteristics, including plausible ground contact behaviors, even though such contacts are neither explicitly modeled nor annotated. As a result, in some embodiments, the systems and methods can offer an efficient mechanism for learning avatar motor control that appears physically consistent without reliance on physics-based engines.

In certain embodiments, the approaches in this disclosure are motivated by two principal observations. First, conventional autoregressive motion models typically generate future motion conditioned on preceding motion sequences. Because such sequences implicitly encode semantic information, the resulting predictions tend to preserve semantic continuity. However, this dependence creates a risk of overfitting to the semantic structure present within limited motion-capture datasets, thereby reducing generalization capability and limiting suitability as a foundation for broad motor control. Second, human movement is governed primarily by physical dynamics over short time intervals, whereas longer-term behavior is shaped by higher-level semantics and intentionality. In some embodiments, systems and methods described herein can leverage this distinction by modeling these temporal regimes separately. In some embodiments, physical dynamics dominate intervals on the order of approximately 0.5 seconds (e.g., 15 frames at 30 frames per second), while longer behaviors are shaped by goals or contextual semantics.

According to some embodiments, in the first stage of motion generation (e.g., PRIMAL^{™} systems), the system captures short-term motion dynamics. Given an initial body state comprising joint positions and joint velocities at a single instant, the system predicts the subsequent motion over a half-second interval. Under the assumption that the short-term future is conditionally independent of distant past motion, every short segment within a mocap sequence becomes a valid training sample. This significantly expands the available training corpus and enables model(s) of the system to learn human motion dynamics directly from data without physics simulation. Although foot-ground interactions are not explicitly represented, the trained model nonetheless generates movements exhibiting visually plausible contact behavior.

In some embodiments, the first stage is implemented as a diffusion model trained in a fully unsupervised manner on a diverse collection of segments (e.g., half-second segments). Once trained, the model produces realistic, autonomous movement in three-dimensional space and supports straightforward real-time control. In some embodiments, modifying joint velocities at inference time causes the predicted motion to adapt immediately. In some embodiments, desired heading directions or target speeds can be induced using classifier-based guidance, with analytically derived gradients.

In some embodiments, long-term and high-level behaviors may be formed by sequencing short-term motion units into composite actions. This separation allows movement dynamics and behavioral semantics to be learned independently across two stages: an initial pretraining stage for motor control and a subsequent adaptation stage for behavior generation. In some embodiments, the second stage introduces a Control Net-based adaptation mechanism, designed to modify the pretrained model for specialized tasks. In some embodiments, adaptation scenarios to be considered include, for example, spatial target reaching and/or few-shot generation of semantic actions. In some embodiments, to improve the expressiveness of the control signal, control embeddings are incorporated into individual transformer blocks.

In some embodiments, the utility of an interactive avatar system described herein can be demonstrated in several applications. An interactive environment built in a real-time engine enables the avatar to maintain perpetual motion while responding to user commands provided through standard game controls. In some embodiments, motions are generated in real time and are not selected from predefined animation libraries. External stimuli-such as, for example, simulated pulls, impulses, or other forces-alter the character's behavior dynamically, and the system responds promptly and naturally, despite lacking explicit physics-based training. In some embodiments, the method supports personalized or style-specific models trained using small amounts of motion-capture data, including data collected from consumer-grade devices. This demonstrates that the pretrained motion foundation serves effectively as a generic motor system upon which customized behaviors can be constructed.

According to certain embodiments, motion generation systems and methods (e.g., PRIMAL^{™} systems) combine the natural movement quality characteristic of mocap-trained systems with physical plausibility traditionally associated with physics-based methods. The system employs an autoregressive diffusion model within a two-stage pretraining-and-adaptation framework. The first stage models short-term human dynamics to support real-time reactivity, while the second stage provides an efficient and general mechanism for adapting the base model to a range of avatar-related behaviors. The resulting interactive motor model enables lifelike digital characters suitable for applications in gaming, augmented and virtual reality, controllable video generation, and interactive agents.

According to certain embodiments, the system employs a generic parametric human-body model (e.g., SMPL-X model available from Mesgcapade GmbH) as a gender-neutral body model and denote it as M(β,r,ϕ,θ). In this representation, β ∈ R¹²⁶ corresponds to the body-shape parameters, r ∈ R³ represents the global root translation, and φ ∈ R⁶ and θ ∈ R¹²⁶ denote the root and joint rotations, respectively, expressed using a continuous 6-dimensional rotation parameterization. In some embodiments, the method focuses on full-body motion and does not model facial or hand articulation. A subset of 22 skeletal joints is extracted. The positions and velocities of these joints are represented as J ∈ R⁶⁶ and J ∈ R⁶⁶, respectively.

According to certain embodiments, the system employs one or more probabilistic generative models based on iterative denoising, such as diffusion-based generative models including one or more denoising diffusion probabilistic models (DDPMs). Diffusion models are widely used in generative tasks, including motion synthesis. In some embodiments, a diffusion process follows the DDPM formulation. Given a clean sample X⁰ ~ p(X⁰), a forward diffusion process incrementally adds Gaussian noise over T steps, producing a sequence of progressively noisier samples represented as, e.g., {X¹,...,X^{t},...,X^{T}}. Using a predefined variance schedule {αₜ}, the forward process satisfies equation (1): ${X}^{t} = \sqrt{{\overline{a}}_{t}} {X}^{0} + \sqrt{1 - {\overline{a}}_{t} ϵ}$ where *a̅ₜ* denotes the cumulative product of variance terms, and *ε* ~ *N* (0,1) is standard Gaussian noise.

In some embodiments, the reverse diffusion process seeks to recover the clean sample X0 from a noisy sample Xt by iteratively removing noise. Following established approaches, a neural network is employed to predict the clean sample, denoted, conditioned on the diffusion timestep, the noisy input, and any auxiliary conditioning signal. The network is trained using the simplified DDPM loss: ${L}_{simple} = E \left[{\left‖{X}^{0}-{\hat{X}}^{0}\right‖}^{2}\right]$ where *X*⁰ refers to the clean (e.g., ground-truth) data sample, *X̂*⁰ refers to the model's predicted clean sample.

In some embodiments, at inference time, the reverse diffusion process may be guided by one or more guidance mechanisms that combine unconditional and conditional predictions and/or apply objective-driven gradients to influence sampling, including, for example, unconditional-conditional interpolation with a tunable guidance weight such as classifier-based guidance (CBG) or classifier-free guidance (CFG). CBG introduces external objective functions and computes their gradients at each denoising step. Although effective, this procedure requires gradient evaluation during sampling and may be unsuitable for real-time applications. In some embodiments, CFG, in contrast, can jointly train conditional and unconditional diffusion models. During sampling, CFG modifies each denoising step using a weighted combination of conditional and unconditional predictions: ${\hat{X}}^{0} = G \left(t,{X}^{t},∅\right) + r \left(G\left(t, {X}^{t}, c\right)-G\left(t,{X}^{t},∅\right)\right)$ where *G*(*t,X^{t}*,*Ø*) represents the unconditional prediction with no condition Ø, *G*(*t,X^{t},c*) represents the conditional prediction with a conditioning signal c, and *r* ∈ *R*⁺ refers to a scaling parameter controlling the influence of the conditioning signal. In some examples, relatively higher values of r strengthen the conditioning effect but may produce unstable or invalid samples if set excessively high.

According to certain embodiments, the present disclosure represents an N-frame motion segment as a temporal sequence of states *X =* {*x*₀,*xᵢ*, ..., *x*_{*N*-1}}*.* Each state is defined as *xᵢ* = (*r,φ,θ,J,J̇*) E *R*²⁶⁷ using a generic parametric human-body model (e.g., SMPL-X body model). During training, the ground-truth body-shape parameter β\betaβ is provided. In some embodiments, during testing, β may be taken from available ground-truth data or sampled from a standard normal distribution N(0, 1) to construct the initial state x_0. In some examples, the parameter β remains fixed for the duration of the generated motion sequence.

In some embodiments, each motion segment can span, for example, 0.1 to 1 seconds, or 0.5 seconds. This duration may vary and correspond approximately to the average airborne time of a human jump or roughly half of a walking cycle, representing a temporal window in which short-term human motion is primarily governed by physical dynamics. In some embodiments, following a canonical coordinate system, the canonical body-centric frame is positioned at the pelvis of the first frame, with the X, Y, and Z axes oriented to the left, upward, and forward, respectively. Neural network training is performed on motion segments that have been transformed into this canonical coordinate system.

According to certain embodiments, systems and methods of motion generation apply one or more autoregressive diffusion models. In some embodiments, an autoregressive diffusion model is a diffusion-based generative model that produces N future motion frames conditioned on M past frames. The denoising network is formulated as *G*(*t,X^{t},x*₀), where the network takes as input the diffusion timestep t, the noisy motion segment *X^{t}* and the initial clean state *x*₀.

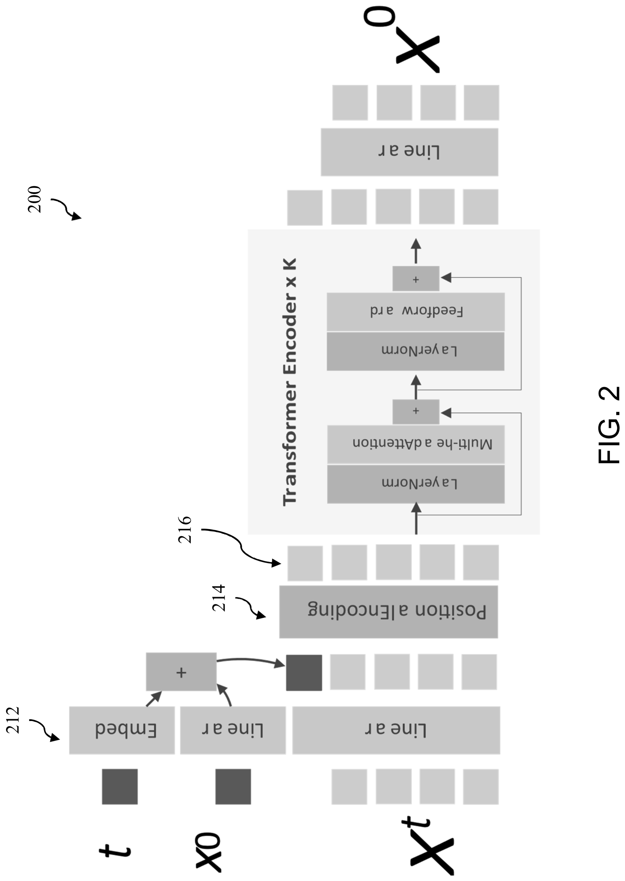

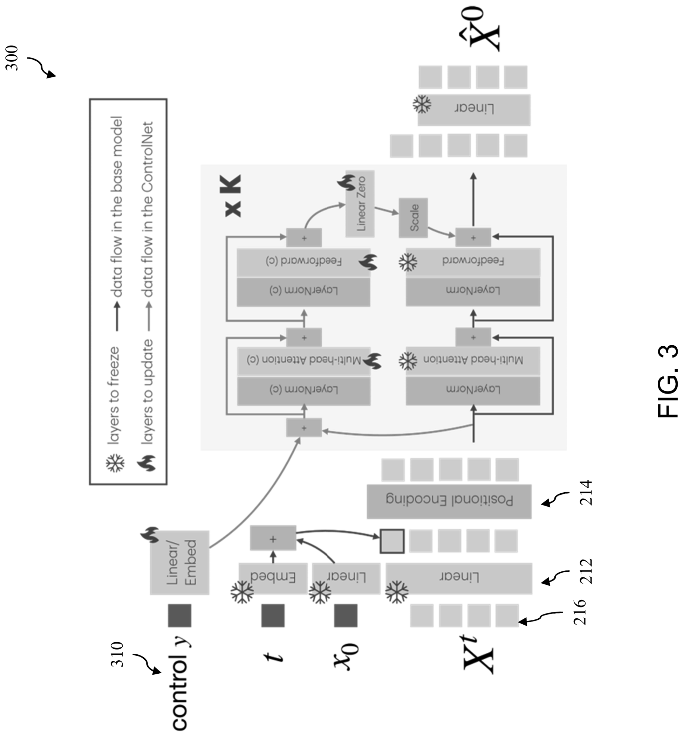

In some embodiments, the network is implemented using a transformer-based architecture, as illustrated in FIGS. 2 and/or 3. The diffusion network is formulated as *X̂*⁰ *= G* (*t,X^{t},x*₀), where *X̂*⁰ refers to predicted clean sample (e.g., output of a denoiser), *G* (·) refers to a denoising network (e.g., a transformer), t refers to a diffusion time step, *X^{t}* refers to a noisy motion at step t, and *x*₀ refers to an initial state embedding input. In some embodiments, a single-frame initial state (e.g., joint positions/velocities and root pose at the segment start) can be used for in-context conditioning. In some embodiments, of FIGS. 2 and 3, the tea green layers contain trainable parameters and the orange blocks are nonlearnable operations. The pink squares denote the tokens at individual frames.

In some embodiments, the model employs an in-context conditioning mechanism in which the embedding of the diffusion timestep is combined with the embedding of the initial body state. In some embodiments, these combined embeddings are concatenated with the embedding of the noisy motion sequence prior to being processed through the transformer layers. In some embodiments, the feed-forward components of the transformer utilize a non-linear activation function such as, for example, the Sigmoid Linear Unit (SiLU) or another suitable activation function. This configuration enables efficient modeling of temporal dependencies while maintaining compatibility with autoregressive sampling procedures.

In some embodiments, and in contrast to prior autoregressive diffusion approaches that rely on annotated training datasets, the described model is trained exclusively on short, unlabeled motion-capture segments. This enables the use of large, unstructured collections of human motion data, including datasets compiled from diverse motion-capture sources, thereby mitigating limitations associated with scarce or manually labeled training material. Additionally, the model operates directly in full motion space rather than in a compressed latent space, eliminating the need for separate tokenizer networks and reducing architectural complexity.

The training objective comprises three terms: a DDPM reconstruction loss and two forward kinematics losses operating on joint positions and joint velocities. The overall loss is given by $L = {L}_{simple} + {γ}_{1} {L}_{FK} + {γ}_{2} {L}_{FKV}$ where Lsimple denotes the simplified DDPM loss, LFK and LFKV represent the forward kinematics losses for joint positions and joint velocities, respectively, and the respective weights *γ*₁ and *γ*₂.

In some embodiments, the two forward kinematics losses are given by ${L}_{FK} = \frac{1}{N} {{\sum }_{i = 0}^{N - 1} \left‖M\left(β, {\hat{r}}_{i}, {\hat{φ}}_{i}, {\hat{θ}}_{i}\right)-{J}_{i}\right‖}_{2}^{2}$ ${L}_{FK} = \frac{1}{N} {{\sum }_{i = 0}^{N - 1} \left‖\dot{M}\left(β, {\hat{r}}_{i}, {\hat{φ}}_{i}, {\hat{θ}}_{i}\right)-{\dot{J}}_{i}\right‖}_{2}^{2}$ where N is the total number of frames in a training window (e.g., 0.5 seconds), i refers to the frame index, *M*(*β,r̂ᵢ,φ̂ᵢ,θ̂ᵢ*) refers to predicted joint positions (e.g., generated by SMPL-X forward-kinematics), *Jᵢ* refers to ground-truth joint positions, *Ṁ*(*β,r̂ᵢ,φ̂ᵢ,θ̂ᵢ*) refers to predicted joint velocities (e.g., generated by SMPL-X forward-kinematics), *J̇ᵢ* refers to ground-truth joint velocities, and ${\left‖⋅\right‖}_{2}^{2}$ refers to the squared L2 distance which measures the squared Euclidean error between the predicted and true joint positions.

In some embodiments, the predicted motion state at the i-th frame is denoted by ${\hat{x}}_{i} = \left({\hat{r}}_{i}, {\hat{φ}}_{i}, {\hat{θ}}_{i}, {\hat{J}}_{i}, {\hat{\dot{J}}}_{i}\right)$, where *r̂ᵢ* is the predicted root translation, *φ̂ᵢ* is predicted root orientation, *θ̂ᵢ* is predicted body joint rotations, *Ĵᵢ* is predicted joint positions, and ${\hat{\dot{J}}}_{i}$ is predicted joint velocities.

In some embodiments, the model is trained in a fully unsupervised manner and does not require explicit foot-contact annotations, unlike certain existing approaches. In some embodiments, contact events-typically characterized by low horizontal velocities of the foot joints-are implicitly captured through minimization of the velocity-based forward-kinematics loss term. In some examples, the use of manual contact labels may introduce inaccuracies that degrade model performance, and therefore such annotations are not utilized. In some embodiments, the trained model exhibits self-stabilizing behavior during prediction, eliminating the need for scheduled sampling procedures, which can significantly slow the training process. Accordingly, the training workflow remains streamlined and efficient compared with existing methods that rely on annotation-dependent preprocessing or curriculum-based sampling strategies.

According to some embodiments, the motion model is trained to represent the conditional distribution p(X | x0). Given an initial state, the model generates a motion segment beginning from that state, and the procedure can be repeated iteratively to produce motion sequences of arbitrary length.

In some embodiments, during inference, three lightweight test-time post-processing techniques can be applied to improve motion quality, including, for example, joint re-projection, ground-plane snapping, and inertialization-based blending. These procedures refine the model output without requiring additional training.

In some embodiments, the trained model can be applied to provide motion control via induced impulses. The model exhibits generalization capabilities beyond the motion patterns present in the training data, demonstrating behavior that is typically associated with physics-based simulation. In some embodiments, external impulses can be introduced by modifying the velocity of one or more body joints, thereby perturbing the avatar's state. These induced impulses serve as a mechanism for action-level control. For example, applying an upward velocity perturbation to joints of a leg can generate a kicking motion, while imparting forward velocity to the torso can initiate a running motion.

In some embodiments, impulse induction is performed by altering the initial joint velocities prior to generating the next motion segment. Empirically, specific perturbation patterns reliably produce distinct behaviors. Automated discovery of effective impulse patterns represents a potential direction for future work.

In some embodiments, the trained model can be applied to provide motion control via classifier-based guidance. A fundamental requirement for interactive avatar control is the ability to direct movement toward a specified heading and speed. To support such control, two classifier-based guidance (CBG) terms are introduced: one regulating locomotion velocity and the other regulating facing direction.

In some embodiments, the movement-guidance loss is defined in terms of the average joint velocity over the half-second prediction horizon:
${L}_{move} = {\left‖\left(\frac{1}{22 N}{\sum }_{i = 0}^{N - 1} {\sum }_{j = 1}^{22} {\hat{\dot{J}}}_{i}\right)-{v}_{goal}\right‖}^{2}$ where the motion segment spans N frames, i is a frame index, j is a joint index (e.g., 22 joints), ${\hat{\dot{J}}}_{i , j}$ is a predicted 3D velocity of joint j at frame i, and v_{goal} ∈ R³ specifies the desired mean velocity.

In some embodiments, the facing-direction guidance loss is defined using the normalized forward-facing vector z obtained from the final frame of the predicted motion. Given a target facing direction r_{goal}, the corresponding loss is:
${L}_{facing} = {\left‖z-{r}_{goal}\right‖}^{2}$ where z ∈ R³ is the normalized forward-facing direction of the avatar in the last frame of the generated motion segment, and r_{goal} ∈ R³ is a unit vector specifying the desired facing direction.

In some embodiments, z is computed from the predicted joint locations. For example, z can be determined by using key torso or pelvis joints to determine where the avatar is "looking" or "moving toward." In some embodiments, r_{goal} is a vector to encode the user's or controller's directional intent.

In some embodiments, to achieve real-time performance, analytical gradients of these guidance functions, including, for example, *Lₘₒᵥₑ* in Equation (7), *L_{facing}* in Equation (8), are derived, avoiding the computational burden of automatic differentiation. In some embodiments, control is exerted by directly modifying the predicted joint positions J or joint velocities j within the state vector xi. In some embodiments, the SMPL-X model parameters, e.g., (*r,φ,θ*) are not manipulated directly.

According to some embodiments, model adaptation can be applied for training models, e.g., an autoregressive diffusion model. In some examples, training the autoregressive diffusion model to high fidelity requires multiple days of computation. In some embodiments, the trained model functions as a base model from which task-specific adaptations may be derived, significantly reducing data requirements and computational cost. This approach follows foundation-model architectures, where large pretrained networks are adapted to downstream tasks through lightweight, modular components rather than retraining from scratch.

In some embodiments, to support this adaption process, a Control Net-inspired adaptation framework is employed, illustrated in FIG. 3. Given a pretrained base model, a Control Net-style adaptor is introduced at each transformer block. A generic control signal, denoted control y, is provided to the adaptors and fused with the block activations to condition the model's behavior. This framework supports task-specific adaptation, including (i) semantic action generation and/or (ii) spatial target reaching, without modifying the frozen base model parameters. In some embodiments, a scaling operation modulates the strength of the control signal applied at inference time, corresponding to the guidance scale r in the classifier-free guidance (CFG) formulation of Equation (3).

In some embodiments, for each adaptor module, the control embedding and the output of the preceding transformer block are combined through addition and passed into a trainable copy of the corresponding transformer block. In some embodiments, during adaptation, only the parameters within these adaptor modules are updated, while the parameters of the underlying base model remain fixed. The training objective includes, for example, the training loss L in Equation (4). Unlike prior ControlNet implementations, where control embeddings are injected once at the input to the adaptor, the present design performs transformer-block-wise integration of the control signal. In some embodiments, this architecture is different from the adaptation structure used in previous work, where a mixture-of-experts component is specifically designed for text-token fusion via cross-attention, whereas the present approach provides a general mechanism for incorporating arbitrary control embeddings through additive fusion.

In one adaptation scenario, a small set of personalized motion-capture sequences with associated action labels is provided. The control signal y in FIG. 3 corresponds to an integer action label, which is mapped to a latent control vector by an embedding layer. After finetuning, the adapted model can generate an unbounded range of personalized motions conditioned on the action labels, including natural transitions between actions not explicitly represented in the small training set. The influence of the action embedding may be modulated during sampling using classifier-free guidance (CFG). Concurrently, joint-velocity perturbations may be applied to elicit reactive behaviors, and continuous movement control may be achieved using the classifier-based guidance (CBG) method described above.

In another adaptation scenario, the control signal y represents a two-dimensional target location that the avatar is intended to reach. During training, the XZ coordinates of the pelvis in the last frame of the canonicalized motion segment serve as the supervisory target. Following established practice, the target location is rescaled using a normalization function to facilitate generalization to extreme or distant positions. A linear layer then maps the scaled target to a latent control vector. After finetuning, the model can synthesize target-directed motions by specifying desired locations at inference time. Because motion is generated autoregressively, the avatar's trajectory can be continuously influenced by updating the target location, enabling intuitive spatial control.

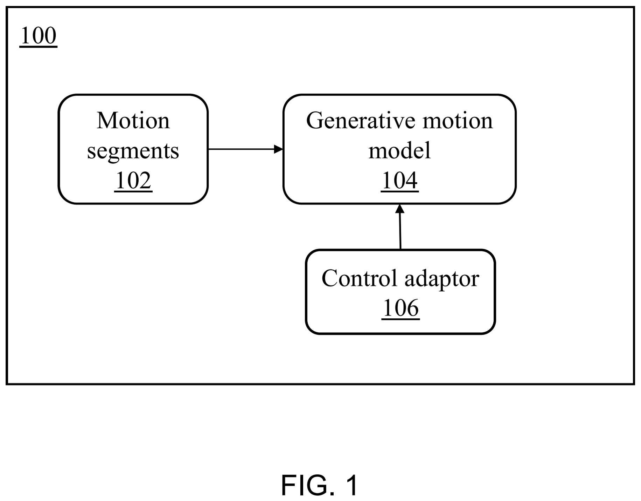

FIG. 1 is a simplified block diagram illustrating an example system 100 for motion generation, in accordance with embodiments of the subject matter of the disclosure. According to certain embodiments, the system 100 extracts a plurality of motion segments 102. In some examples, each motion segment of the motion segments 102 includes a series of frames. In some embodiments, the system 100 implements a generative motion model 104 by training a diffusion model based on each motion segment of the plurality of motion segments 102. In some embodiments, the system can first generate a base motor model, and then add a control adaptor 106 at one or more transformer blocks of the base motor model. The control adaptor is configured to receive a control input. In some embodiments, the system 100 can train the control adaptor 106 by using the control input to obtain a task-specific adapted model.

FIG. 2 is a simplified block diagram illustrating an example network architecture 200 for motion generation showing in-context conditioning, in accordance with embodiments of the subject matter of the disclosure. FIG. 3 is a simplified block diagram illustrating an example network architecture 300 in which the same base model is augmented with task-specific adaptation modules, in accordance with embodiments of the subject matter of the disclosure. According to certain embodiments, the network architecture 200/300 includes a diffusion network formulated as *X̂*⁰ *= G* (*t,X^{t},x*₀), where *X̂*⁰ refers to predicted clean sample (e.g., output of a denoiser), *G* (·) refers to a denoising network (e.g., a transformer), t refers to a diffusion time step, *X^{t}* refers to a noisy motion at step t, and *x*₀ refers to an initial state embedding input.

In some embodiments, layers 212 represent the trainable transformer blocks of the diffusion model, blocks 214 correspond to non-learnable operations such as positional encoding or token reshaping, and squares 216 represent per-frame motion tokens processed by the network. As shown in FIG. 3, the network architecture 300 further introduces a control adaptor 310 (e.g., a ControlNet-like adaptor) at one or more transformer blocks, where the adaptor receives a control signal-such as an action label or a target location-and injects a learned control embedding into the transformer block via additive fusion. In some examples, when a user specifies an action such as "crouch," the control adaptor adds the corresponding embedding to the intermediate activations of several transformer blocks, steering the output motion toward the crouching behavior. A scale operation may be applied to the control signal to modulate its influence during inference, corresponding to the guidance weight γ in Equation (3). During training of the control adaptor 310, the parameters associated with the adaptor modules are updated while the parameters of the underlying base motor model remain frozen, enabling efficient task-specific adaptation without altering the pretrained generative motion dynamics.

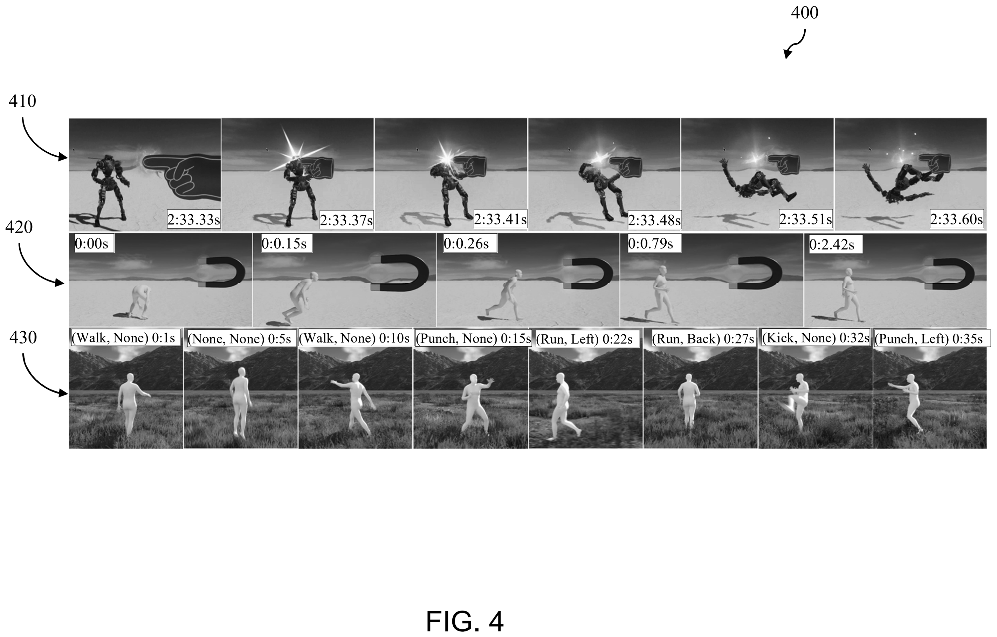

In some embodiments, FIG. 4 illustrates a variety of example outputs 400 produced by a generative, real-time three-dimensional character animation system, referred to herein as PRIMAL^{™}. As shown in the first row 410, the system enables an avatar to react immediately and naturally to externally applied impulses, such as sudden velocity perturbations that simulate pushes, bumps, kicks, etc. In the second row 420, after lightweight task-specific adaptation, the avatar can respond to spatial control inputs, such as being continuously "pulled" toward a moving virtual magnet, resulting in smooth target-seeking locomotion that adjusts in real time as the target moves. As shown in the third row 430, the system can be personalized using only a small amount of subject-specific motion-capture data-such as a brief recording obtained using consumer-grade capture methods (e.g., Mocapade 3.0 capture extracted from cellphone video, Mocapade 3.0 is available from Meshcapade GmbH) that extract full-body motion from standard video footage-enabling the avatar to reproduce the individual's characteristic movement style. Through these mechanisms, the system supports both discrete commands (e.g., initiating a specific action) and continuous control signals (e.g., steering direction or desired speed). In some embodiments, when no control input or external perturbation is provided, the avatar continues to generate autonomous, unbounded locomotion in three-dimensional space, maintaining physically plausible and visually coherent motion. In some embodiments, all behaviors can be generated from data-driven diffusion models without any physics-based simulation.

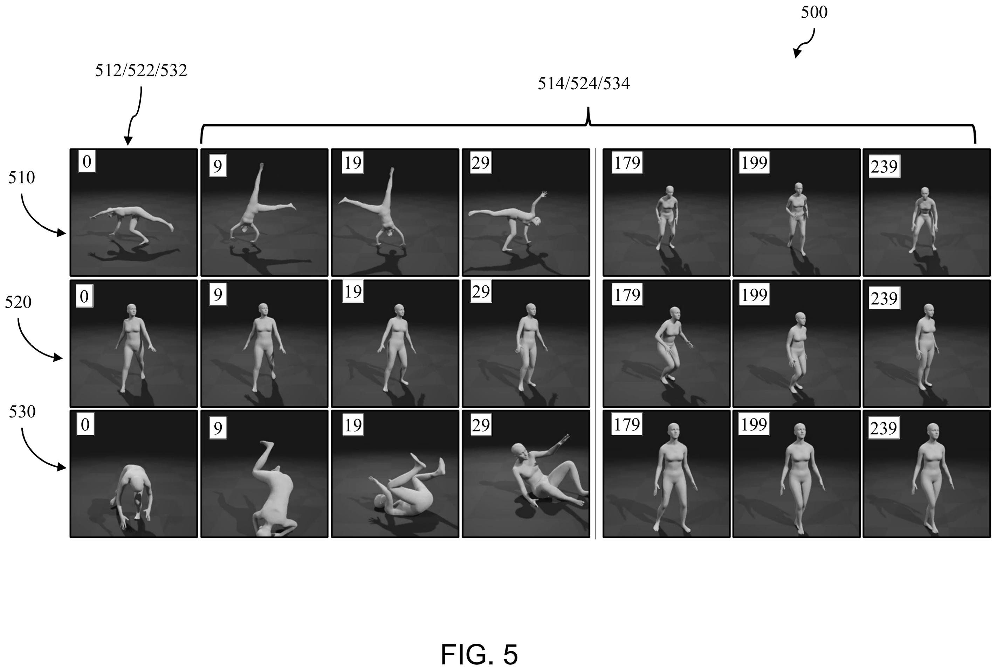

FIG. 5 illustrates examples 500 of future motions generated based on an initial state, in accordance with embodiments of the subject matter of the disclosure. Each row in FIG. 5 corresponds to a separate generation example 510, 520, and 530. At the beginning of each example, the system receives a distinct initial state 512, 522, or 532, which may include the avatar's root position, body orientation, joint rotations, and joint velocities at a single frame. In some embodiments, based on this initial frame as input, the diffusion-based motor model predicts a future motion sequence 514, 524, or 534 that evolves naturally from the provided starting state. For instance, an initial state showing the avatar leaning slightly forward may produce a stepping-forward motion, while an initial state with one leg raised may evolve into a walking, balancing, or kicking-like sequence depending on the captured dynamics. The generated segments can be autoregressively chained to produce motion of arbitrary length in real time, with each subsequent segment conditioned on the final frame of the previous one. The frame indices embedded in FIG. 5 illustrate the temporal progression of each predicted sequence.

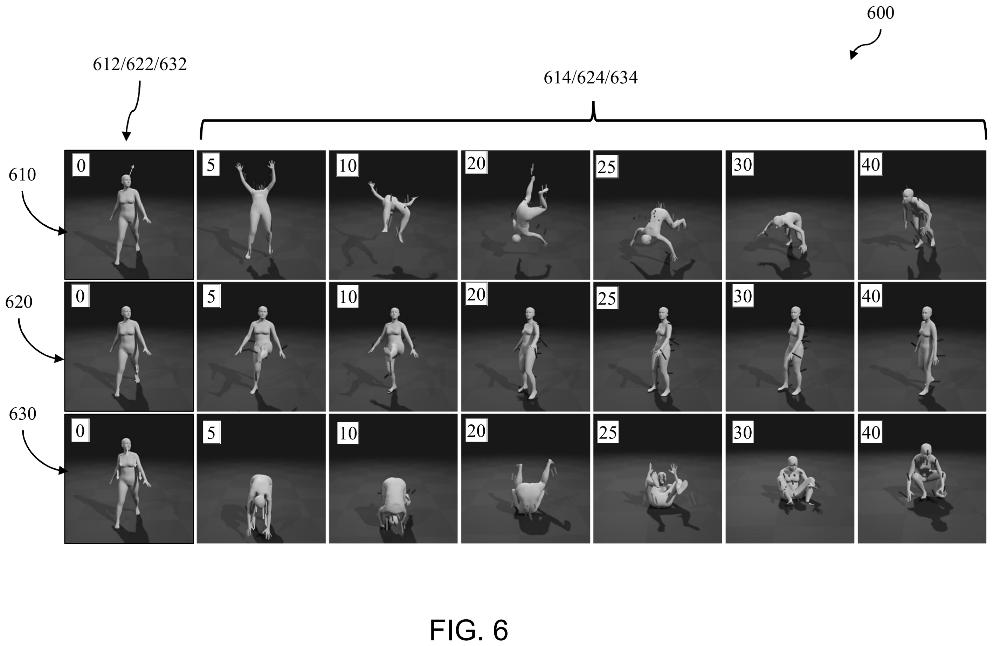

In some embodiments, FIG. 6 illustrates examples 600 of avatar reactions to externally induced impulses, demonstrating how the system produces immediate, physically plausible motion responses when joint velocities are perturbed. Each row 610, 620, and 630 depicts a different reaction scenario. In the initial frame 612, 622, or 632 of each row, arrows indicate the velocity perturbations applied to specific joints, for example, a forward impulse applied to the chest, a lateral impulse applied to the pelvis, an upward impulse applied to a leg, etc. After this impulse is injected into the initial state, the diffusion-based motor model predicts the subsequent motion segment, shown in the future frames 614, 624, or 634. In these predicted frames, the bars drawn at each joint represent the generated joint positions and velocities, with darker shading indicating joints moving at lower velocities. For instance, when a forward push is applied to the torso, the avatar naturally takes compensatory steps to maintain balance, producing a motion sequence in which the legs accelerate while the torso stabilizes. When an upward kick-like impulse is applied to a foot, the avatar generates a swinging or stepping reaction consistent with the perturbed velocity. These examples illustrate that the model reacts in real time to a wide range of induced impulses, producing dynamic yet coherent motion without relying on any physics-based simulation.

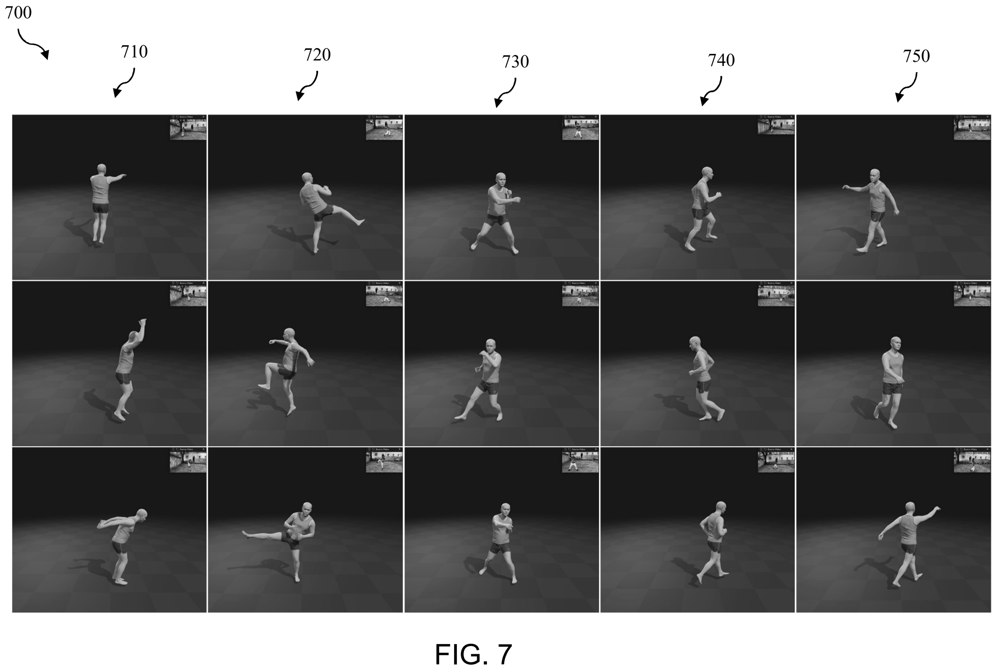

In some embodiments, FIG. 7 illustrates examples 700 of snapshots from a personalized motion-capture dataset, showing how the system can learn user-specific motion styles from only a small quantity of motion data. In some embodiments, the personalized dataset is obtained using a motion-capture technique capable of extracting full-body motion from readily available video sources, such as recordings captured using a standard mobile device. In examples 700, the personalized dataset is obtained using a consumer-grade motion-capture technique (e.g., MoCapade 3.0), which extracts full-body motion from ordinary cellphone videos. Each column in FIG. 7 corresponds to a different action category captured from the user including, for example, column 710 showing frames from a "Jump" sequence, column 720 showing frames from a "Kick" sequence, column 730 showing frames from a "Punch" sequence, column 740 showing frames from a "Run" sequence, and column 750 showing frames from a "Walk" sequence. These snapshots represent the user's natural movement style as estimated from a video, such as subtle variations in posture, arm swing, or jump height. The personalized dataset can then be used in a lightweight adaptation stage to train the system's control adaptor, enabling the avatar to reproduce the individual's characteristic motion patterns-even when generating new motions that were not explicitly captured-while preserving the stable short-term dynamics of the underlying pretrained motor model.

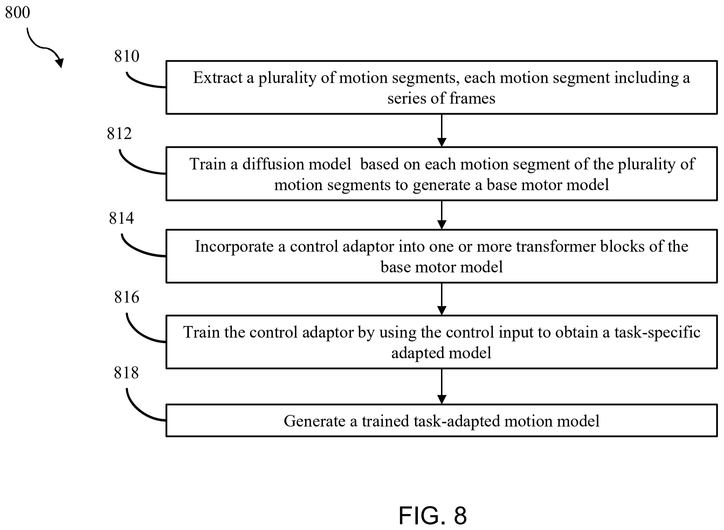

FIG. 8 is a flow diagram illustrating an example method 800 for motion generation, in accordance with embodiments of the subject matter of the disclosure. The method 800 includes processes 810, 812, 814, 816 and 818. Although the above has been shown using a selected group of processes for the method 800, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

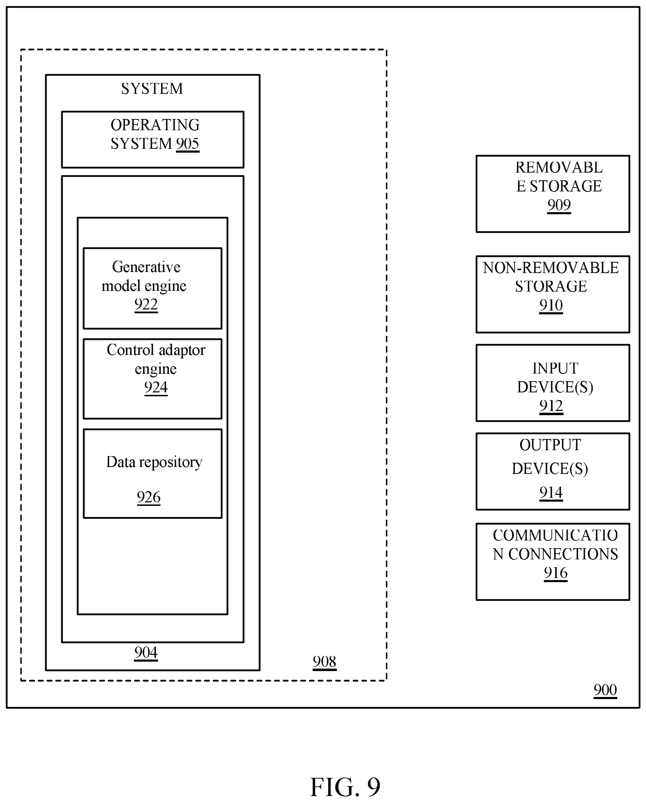

In some embodiments, some or all processes (e.g., steps) of the method 800 are performed by a system (e.g., the system 900 in FIG. 9). In certain examples, some or all processes (e.g., steps) of the method 800 are performed by a computer and/or one or more processors directed by one or more pieces of software code. In some examples, some or all processes (e.g., steps) of the method 800 are performed according to instructions included by a non-transitory computer-readable medium (e.g., in a computer program product, such as a computer-readable flash drive). For example, a non-transitory computer-readable medium is readable by a computer.

According to some embodiments, at process 810, the system (e.g., the system 900 in FIG. 9) extracting a plurality of motion segments, each motion segment including a series of frames. In some embodiments, each motion segment spans, for example about 0.1 to about 1.0 seconds, about 0.2 to about 0.8 seconds, or about 0.5 seconds.

In some embodiments, the system canonicalizes each motion segment of the plurality of motion segments to generate a canonicalized segment. In some embodiments, the system can canonicalizes each motion segment by expressing the frames in a standardized, body-centric coordinate system anchored at the pelvis of the first frame. In some embodiments, the system computes a local reference frame whose origin is the initial pelvis position and whose axes are aligned to, for example, the body's upward and forward directions, obtained by projecting a torso-based forward vector onto the ground plane. In some embodiments, each frame's root translation is then shifted and rotated into this canonical frame, and the joint positions and joint velocities are similarly transformed by applying the same rotation (and translation for positions). In some embodiments, root orientations are converted to rotation matrices, aligned to the canonical frame, and converted back to the chosen rotation representation, while local joint rotations remain unchanged. In some embodiments, the canonicalization normalizes global position, orientation, and motion direction across segments, enabling the diffusion model to learn short-term human motion dynamics independent of the subject's original world-space trajectory.

According to some embodiments, at process 812, the system (e.g., the system 900 in FIG. 9) trains a diffusion model based on each motion segment of the plurality of motion segments to generate a base motor model. In some embodiments, the system applies forward diffusion to the canonicalized segment to generate noisy versions for training. In some embodiments, the diffusion model includes a transformer-based denoising neural network.

In some embodiments, the diffusion model can be trained using unlabeled short-duration motion segments. In some embodiments, the system trains the diffusion model by generating a sample pair including an initial state and a clean target for each motion segment, embedding the initial state, and/or combining the initial state with time embeddings and noisy embeddings to generate a fused representation for the transformer-based denoising neural network. In some embodiments, the initial state includes an initial frame in one of the motion segments. The clean target includes a canonicalized segment. Each frame in one of the motion segments includes a root translation and rotation, joint rotations, joint locations, and joint velocities.

In some embodiments, the system trains the diffusion model by training a loss including a forward kinematics (FK) joint position loss component and/or a forward kinematics joint velocity loss component. In some embodiments, training of a loss can penalize the difference between predicted and ground-truth joint locations and velocities as computed through the SMPL-X kinematic chain. In some embodiments, the training of a diffusion model is an unsupervised training without foot contact labels.

In some examples, when the model predicts a pose in which the right foot should be stationary on the ground, the FK-velocity loss encourages the predicted foot-joint velocity to approach zero, naturally producing contact-like behavior even though no foot-contact labels are provided. In some examples, the training process relies on short motion segments and FK-based supervision, and does not incorporate any annotated contact events or physics-based labels, the diffusion model is trained in a fully unsupervised manner while still learning to generate physically plausible movements.

In some embodiments, the base motor model is configured to generate unbounded motion autoregressively from an initial frame. In some embodiments, a last frame of a generated segment is iteratively used as a next initial frame for a subsequent segment. In some examples, given a single initial pose and its joint velocities, the model can generate, for example, a 0.5-second motion segment, where the final frame of that segment-containing updated root translation, joint rotations, and joint velocities-is then used as the initial frame for generating the next 0.5-second motion segment, and this process repeats indefinitely. By iteratively feeding each predicted final frame back into the model as the next initial frame, the system produces a continuous, seamless motion sequence of arbitrary duration without requiring predefined trajectories or long-horizon motion input.

In some embodiments, the base motor model is configured to provide real-time reactions in response to external impulses including kicks or pushes. In some examples, when an external force is applied to the avatar's torso by momentarily increasing the forward velocity of the chest joint, the model immediately incorporates this perturbed state into the next autoregressive prediction step, causing the avatar to stumble forward or take a compensating step without requiring any physics engine or predefined reaction animation. Similarly, applying an upward velocity impulse to a leg joint can cause a natural-looking kicking motion. In some examples, the model conditions each new motion segment on the altered joint velocities of the preceding frame, and the model responds to such impulses instantly and produces fluid, physically plausible reactive behaviors in real time.

In some embodiments, the base motor model is configured to provide motion control with a classifier-based guidance including, for example, movement guidance or facing guidance. The classifier-based guidance can influence the generated motion by adjusting the predicted joint positions or velocities toward a desired objective. In some examples, when a controller or a user specifies a target forward speed, the system computes a movement-guidance term based on the difference between the avatar's predicted average joint velocity and the desired velocity, and applies the corresponding analytical gradient during each denoising step so that the avatar accelerates smoothly to the commanded speed. Similarly, when a controller or user input specifies a new desired facing direction, the system evaluates a facing-guidance loss between the avatar's current forward-facing vector and the target direction, steering the avatar to rotate naturally toward the goal over the next generated segment. Through these guidance mechanisms, the model produces responsive, goal-directed motion in real time without requiring predefined animations or physics-based control policies.

According to some embodiments, at process 814, the system (e.g., the system 900 in FIG. 9) adds a control adaptor at one or more transformer blocks of the base motor model. In some embodiments, the control adaptor is integrated into each selected transformer block through additive fusion of a control embedding with the block's internal activations. In some examples, when a user provides an action label such as "jump" or a spatial target such as a desired landing point, the system first maps the control input to a latent control vector and then injects this vector into multiple transformer blocks by adding it to the block's intermediate feature representations. This block-wise additive fusion modulates the behavior of the otherwise frozen base motor model, enabling the adapted model to generate action-specific or target-directed motions while preserving the underlying learned short-term dynamics.

According to some embodiments, at process 816, the system (e.g., the system 900 in FIG. 9) trains the control adaptor by providing a control input to the control adaptor to provide task-specific adaptation. In some embodiments, the system trains the control adaptor by supplying it with a control input that specifies the desired task behavior, allowing the adaptor to modify the otherwise frozen base motor model to produce task-specific motion.

In some embodiments, the control input includes an action label for semantic action generation. In some examples, when the system is trained for semantic action generation, a control input such as an action label, for example, "sit," "wave," or "jump", is mapped to a learned control embedding and injected into the adaptor modules during training. The adaptor parameters are then optimized so that the generated motion segment reflects the labeled action while preserving the underlying short-term dynamics learned by the base model.

In some embodiments, the control input includes a 2D target location for spatial target reaching. In some examples, when the task involves spatial target reaching, a control input representing a 2D target location is provided to the adaptor, which learns to adjust the generated motion so that the avatar naturally moves toward the specified location. By training the adaptor with such task-specific control inputs, the system efficiently produces specialized behaviors without retraining the full diffusion-based motor model.

In some embodiments, the system can train the control adaptor by computing a control embedding for the control input, and fusing the control embedding with an input of the one or more transformer blocks through additive fusion. In some examples, when the control input is a semantic action label such as, for example, "turn left," the system maps this label to a learned control vector using an embedding layer. During training, this control vector is added to the intermediate activations of selected transformer blocks, allowing the adaptor to influence the motion generation process at those layers. Through this additive fusion mechanism, the adaptor parameters are trained to steer the generated motion toward behavior consistent with the control input, while the base motor model remains frozen and continues to provide stable short-term physical dynamics.

In some embodiments, the system can apply a scale operation to the control input so that the influence of the control adaptor on the generated motion can be increased or decreased at inference time. In some examples, when a user provides a 2D target location indicating where the avatar should move, the system may multiply the corresponding control embedding by a scale factor r, such that a larger value of r causes the avatar to turn and walk more aggressively toward the target, while a smaller value results in a more subtle directional adjustment. Similarly, when the control input is an action label, scaling the control embedding can strengthen or soften the expression of that action in the generated motion. This scaling operation allows intuitive, continuous adjustment of control strength without modifying the underlying model parameters.

In some embodiments, the system trains the control adaptor independently of the base motor model by freezing at least some or all parameters of the base motor model during adaptor training, allowing the adaptor to be optimized without altering the pretrained diffusion-based motor dynamics. In some examples, when adapting the system to perform a new action such as "sidestep right," only the lightweight adaptor modules receive gradient updates, while the underlying transformer layers of the base model remain fixed. During training, the adaptor learns how to modify intermediate transformer activations-based on the provided control input-so that the generated motion reflects the desired sidestep behavior, yet continues to exhibit the stable and physically plausible short-term movement patterns learned by the untouched base model. This separation enables efficient task-specific adaptation using small datasets while preserving the robustness of the pretrained motor foundation. In some embodiments, a new action can be represented by an action label or a text description. In the latter case, the approach can be extended towards an open-vocabulary text-to-motion generation, and a text-image embedding model (e.g., a text encoder) such as, for example, contrastive language-image pre-training (CLIP), can be used.

According to some embodiments, at process 818, the system (e.g., the system 900 in FIG. 9) generates a trained task-adapted motion model. In some embodiments, At an inference stage, the output of the trained task-adapted motion model can be processed by re-projecting predicted joints, snapping foot joints to a ground plane, and blending successive segments using inertialization.

In some embodiments, training the control adaptor in combination with the frozen base motor model produces a trained task-adapted motion model, which can then be used at inference time with lightweight post-processing to improve visual quality and physical consistency. In some examples, after the adapted model generates a motion segment for a task such as, for example, walking to a designated target, the system may refine the output by re-projecting predicted joints onto the SMPL-X kinematic chain to remove small drift artifacts, snapping foot joints to the ground plane when the body tends to float in the air, and blending successive segments using inertialization so transitions between autoregressively generated segments remain smooth and free of discontinuities. In some examples, a ground snapping operation can be enabled, independent of the predicted velocities. By applying these post-processing steps, the task-adapted motion model produces high-quality, continuous motion sequences suitable for real-time avatar control.

FIG. 9 is a simplified diagram of a computing system 900 (e.g., a server, a computing device, a computing system, etc.), with which aspects of the present disclosure may be practiced. The computing device components described below may be suitable for the computing devices described above. The computing system 900 may include a system 904 which may include or couple to at least one processing unit. Depending on the configuration and type of computing device, the system 904 may include, for example, volatile storage (e.g., random access memory), non-volatile storage (e.g., read-only memory), flash memory, or any combination of such memories.

The system 904 may include an operating system 905, suitable for running a software application, such as one or more components supported by the systems described herein. As examples, the system 904 may store one or more computing models to be applied by a generative model engine or processor 922, and a control adaptor engine or processor 924. In some embodiments, the system 904 may store one or more computing models and/or datasets in a data repository 926. The operating system 905, for example, may be suitable for controlling the operation of the computing system 900.

According to certain embodiments, the generative model engine or processor 922, and the control adaptor engine or processor 924 can implement various methods (e.g., the method 800 in FIG. 8) and systems (e.g., the system 100 in FIG. 1, etc.). In some embodiments, the generative model engine or processor 922 can implement the generative motion model 104 in FIG. 1.

A basic configuration is illustrated in FIG. 9 by those components within a dashed line 908. The computing system 900 may have additional features or functionality. For example, the computing system 900 may also include additional data storage devices (removable and/or non-removable) such as, for example, magnetic disks, optical disks, or tape. Such additional storage is illustrated in FIG. 9 by a removable storage device 909 and a non-removable storage device 910.

As stated above, a number of programs and data files may be stored in the system 904. While executing on a processing unit, the engines 922 and 924 may perform processes including, but not limited to, the aspects, as described herein. Other program modules that may be used in accordance with aspects of the present disclosure may include electronic mail and contacts applications, word processing applications, spreadsheet applications, database applications, slide presentation applications, drawing or computer-aided application programs, and the like.

Furthermore, aspects of the disclosure may be practiced in an electrical circuit including discrete electronic elements, packaged or integrated electronic chips containing logic gates, a circuit utilizing a microprocessor, or on a single chip containing electronic elements or microprocessors. For example, aspects of the disclosure may be practiced via a system-on-a-chip (SOC) where each or many of the components illustrated in FIG. 9 may be integrated onto a single integrated circuit. Such an SOC device may include one or more processing units, graphics units, communications units, system virtualization units and various application functionality, all of which are integrated (or "burned") onto the chip substrate as a single integrated circuit. When operating via an SOC, the functionality, described herein, with respect to the capability of the client to switch protocols, may be operated via application-specific logic integrated with other components of the computing system 900 on the single integrated circuit (chip). Some aspects of the disclosure may also be practiced using other technologies capable of performing logical operations such as, for example, AND, OR, and NOT, including but not limited to mechanical, optical, fluidic, and quantum technologies. In addition, some aspects of the disclosure may be practiced within a general-purpose computer or in any other circuits or systems. As referred to herein, any processing can occur on a single processor or multiple processors.

The computing system 900 may also have one or more input device(s) 912, such as a keyboard, a mouse, a pen, a sound or voice input device, a touch or swipe input device, and the like. The output device(s) 914, such as a display, speakers, a printer, etc. may also be included. The aforementioned devices are examples and others may be used. The computing system 900 may include one or more communication connections 916 allowing communications with computing units (e.g., GPUs, TPUs, etc.). Examples of suitable communication connections 916 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system 904, the removable storage device 909, and the non-removable storage device 910 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information, and which can be accessed by the computing system 900. Any such computer storage media may be part of the computing system 900. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

According to certain embodiments, a method for motion generation is provided. The method includes extracting a plurality of motion segments, each motion segment including a series of frames; training a diffusion model based on each motion segment of the plurality of motion segments to generate a base motor model; incorporating a control adaptor into one or more transformer blocks of the base motor model, the control adaptor configured to receive a control input; and training the control adaptor by using the control input to obtain a task-specific adapted model.

According to certain embodiments, a system includes at least one processor; and memory storing instructions that, when executed by the at least one processor, cause the system to perform a set of operations. In some examples, the set of operations includes extracting a plurality of motion segments, each motion segment including a series of frames; training a diffusion model based on each motion segment of the plurality of motion segments to generate a base motor model; incorporating a control adaptor into one or more transformer blocks of the base motor model, the control adaptor configured to receive a control input; and training the control adaptor by using the control input to obtain a task-specific adapted model.

According to certain embodiments, a non-transitory computer-readable medium stores instructions for motion generation. In some examples, the instructions when executed by one or more processors, cause the one or more processors to perform a set of operations including extracting a plurality of motion segments, each motion segment including a series of frames; training a diffusion model based on each motion segment of the plurality of motion segments to generate a base motor model; incorporating a control adaptor into one or more transformer blocks of the base motor model, the control adaptor configured to receive a control input; and training the control adaptor by using the control input to obtain a task-specific adapted model.

In some embodiments, the control input includes an action label for semantic action generation. In some embodiments, the control input includes a 2D target location for spatial target reaching. In some embodiments, the step of training the control adaptor further comprises computing a control embedding for the control input; and adding the control embedding to an activation of the one or more transformer blocks. In some embodiments, the method further includes applying a scale operation to the control input.

In some embodiments, the control adaptor is trained independently of the base motor model, and one or more parameters of the base motor model are frozen during a training of the control adaptor. In some embodiments, the method further includes canonicalizing each motion segment of the plurality of motion segments to generate a canonicalized segment. In some embodiments, the method further includes applying forward diffusion to the canonicalized segment to generate noisy versions for training.

In some embodiments, the diffusion model is trained using unlabeled motion segments of the plurality of motion segments. In some embodiments, the diffusion model includes a transformer-based denoising neural network. In some embodiments, the step of training the diffusion model further includes generating a sample pair including an initial state and a clean target for each motion segment; embedding the initial state; combining the embedded initial state with time embeddings and noisy embeddings to generate a fused representation for the transformer-based denoising neural network.

In some embodiments, the initial state includes an initial frame in one of the motion segments. The clean target includes a canonicalized segment. Each frame in one of the motion segments includes a root translation and rotation, joint rotations, joint locations, and joint velocities. In some embodiments, the step of training the diffusion model further comprises training a loss including a forward kinematics joint-position loss component or a forward kinematics joint-velocity loss component.

In some embodiments, the step of training a diffusion model is an unsupervised training without foot contact labels. In some embodiments, the base motor model is configured to generate unbounded motion autoregressively from an initial frame. A last frame of a generated segment is iteratively used as a next initial frame for a subsequent segment. In some embodiments, the base motor model is configured to provide real-time reactions in response to impulse-based perturbations applied to one or more joints.

In some embodiments, the base motor model is configured to provide motion control with a classifier-based guidance including movement guidance or facing guidance. In some embodiments, the method further includes at an inference stage, re-projecting predicted joints, snapping foot joints to a ground plane, and blending successive segments using inertialization. In some embodiments, each motion segment spans about 0.1 to about 1.0 seconds.

Various modifications and additions can be made to the exemplary embodiments discussed without departing from the scope of the present disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as they fall within the scope of the claims, together with all equivalents thereof.

## Claims

1. A method for motion generation, the method comprising:
extracting a plurality of motion segments, each motion segment including a series of frames;
training a diffusion model based on each motion segment of the plurality of motion segments to generate a base motor model;
incorporating a control adaptor into one or more transformer blocks of the base motor model, the control adaptor configured to receive a control input; and
training the control adaptor by using the control input to obtain a task-specific adapted model.

2. The method of claim 1, wherein the control input includes either (i) an action label for semantic action generation; or (ii) a 2D target location for spatial target reaching.

3. The method of any of the preceding claims, wherein the step of training the control adaptor further comprises:
computing a control embedding for the control input; and
adding the control embedding to an activation of the one or more transformer blocks.

4. The method of any of the preceding claims, further comprising applying a scale operation to the control input.

5. The method of any of the preceding claims, wherein the control adaptor is trained independently of the base motor model, and one or more parameters of the base motor model are frozen during a training of the control adaptor.

6. The method of any of the preceding claims, further comprising canonicalizing each motion segment of the plurality of motion segments to generate a canonicalized segment, and, optionally, applying forward diffusion to the canonicalized segment to generate noisy versions for training.

7. The method of any of the preceding claims, wherein:
the diffusion model is trained using unlabeled motion segments of the plurality of motion segments;
the diffusion model includes a transformer-based denoising neural network; and
the step of training the diffusion model further comprises:
generating a sample pair including an initial state and a clean target for each motion segment;
embedding the initial state;
combining the embedded initial state with time embeddings and noisy embeddings to generate a fused representation for the transformer-based denoising neural network.

8. The method of claim 7, wherein:
the initial state comprises an initial frame in one of the motion segments;
the clean target comprises a canonicalized segment; and
each frame in one of the motion segments includes a root translation and rotation, joint rotations, joint locations, and joint velocities.

9. The method of any of the preceding claims, wherein the step of training the diffusion model further comprises training a loss including a forward kinematics joint-position loss component or a forward kinematics joint-velocity loss component.

10. The method of any of the preceding claims, wherein the step of training a diffusion model is an unsupervised training without foot contact labels.

11. The method of any of the preceding claims, wherein the base motor model is configured to provide at least the step of:
(i) generating unbounded motion autoregressively from an initial frame, wherein a last frame of a generated segment is iteratively used as a next initial frame for a subsequent segment;
(ii) providing real-time reactions in response to impulse-based perturbations applied to one or more joints; or
(iii) providing motion control with a classifier-based guidance including movement guidance or facing guidance.

12. The method of any of the preceding claims, further comprising:
at an inference stage, re-projecting predicted joints, snapping foot joints to a ground plane, and blending successive segments using inertialization.

13. The method of any of the preceding claims, wherein each motion segment spans about 0.1 to about 1.0 seconds.

14. A system for motion generation, the system comprising:
at least one processor; and
memory storing instructions that, when executed by the at least one processor, cause the system to perform a set of operations, the set of operations comprising:
extracting a plurality of motion segments, each motion segment including a series of frames;
training a diffusion model based on each motion segment of the plurality of motion segments to generate a base motor model;
incorporating a control adaptor into one or more transformer blocks of the base motor model; and
training the control adaptor by using the control input to obtain a task-specific adapted model.

15. The system of claim 14, wherein the control adaptor is trained independent of the base motor model, and one or more parameters of the base motor model are frozen during a training of the control adaptor.

16. A non-transitory computer-readable medium storing instructions for motion generation, the instructions when executed by one or more processors, cause the one or more processors to perform a set of operations comprising:
extracting a plurality of motion segments, each motion segment including a series of frames;
training a diffusion model based on each motion segment of the plurality of motion segments to generate a base motor model;
incorporating a control adaptor into one or more transformer blocks of the base motor model; and
training the control adaptor by using the control input to obtain a task-specific adapted model.
